# EUROPÄISCHE PATENTSCHRIFT

(11) **EP 2 944 942 B1**
(45) Veröffentlichungstag und Bekanntmachung des Hinweises auf die Patenterteilung: **22.03.2023**
(21) Anmeldenummer: 15166172.5
(22) Anmeldetag: 04.05.2015
(51) Int. Cl.: A47L 11/00, G01N 21/25, G01N 21/31

(54) **SELBSTTÄTIG VERFAHRBARES REINIGUNGSGERÄT**
AUTOMOTIVE CLEANER
APPAREIL DE NETTOYAGE À DÉPLACEMENT AUTOMATIQUE

(30) Priorität: 16.05.2014 DE 102014106975
(43) Veröffentlichungstag der Anmeldung: 18.11.2015
(73) Patentinhaber: Vorwerk & Co. Interholding GmbH, 42275 Wuppertal (DE)
(72) Erfinder: Strang, Benjamin, 42651 Solingen (DE)
(74) Vertreter: Müller, Enno

(56) Entgegenhaltungen:
- EP-A1- 1 677 099
- WO-A1-2007/088382
- WO-A2-2007/109624
- JP-A- S57 113 349
- JP-A- S58 172 504
- US-A- 5 962 853
- US-B1- 6 446 302

## Beschreibung

Die Erfindung betrifft ein Gerät zur Reinigung oder Bearbeitung einer Oberfläche, wobei das Gerät eine Lichtquelle zur Bestrahlung der Oberfläche mit Licht und eine optische Detektionseinrichtung zur Detektion des von der Oberfläche reflektierten Lichtes aufweist. Das Gerät kann grundsätzlich ein selbsttätig verfahrbares oder auch ein handgeführtes Gerät sein.

Weiter betrifft die Erfindung ein Verfahren zum Betreiben eines Gerätes zur Reinigung oder Bearbeitung einer Oberfläche, bei welchem eine Oberfläche mit Licht bestrahlt wird und das von der Oberfläche reflektierte Licht detektiert wird.

Geräte der vorgenannten Art sind bekannt. Diese können beispielsweise Roboter zur Reinigung oder Pflege von Bodenbelegen oder auch Roboter zum Mähen eines Rasens sein. Die Druckschrift DE 103 57 637 A1 offenbart beispielsweise ein selbsttätig verfahrbares Bodenreinigungsgerät, welches zur Feuchtreinigung von Oberflächen, beispielsweise Fliesenböden, geeignet ist. Aus der DE 102 42 257 A1 ist beispielsweise ein Saug-/Kehrroboter bekannt.

Aus der EP 1 677 099 A1 ist ein Gerät zur Reinigung oder Bearbeitung einer Oberfläche bekannt. Es weist eine Überwachungseinrichtung auf, die erkennen kann, ob eine Oberfläche als sauber oder als verschmutzt anzusehen ist.

Aus der WO 2007/088382 A1 ist eine Vorrichtung bekannt, mit einem Filterelement mit welchem eine große Anzahl von Lichtquellenlängen detektiert werden kann.

Aus der US 5,962,853 A ist ein Gerät zur Erkennung einer Oberflächenbeschaffenheit eines Fahrweges bekannt, wobei die Erkennung in Bezug auf Trockenheit, Nässe oder Vereisung gegeben ist. Hierzu sind vier Wellenlängenbereiche ausgewählt, die sich im Hinblick auf die Absorption des Lichtes durch Wassermoleküle der Eis unterscheiden.

Aus der US 6,446,302 B1 ist eine Lichtquelle und ein Filterelement an einem Reinigungsgerät bekannt, mithilfe welchen von der Oberfläche reflektiertes Licht in Bezug auf unterschiedliche Spektralbereiche detektiert wird.

Darüber hinaus ist es im Stand der Technik auch bekannt, derartige Geräte mit Kameras auszustatten, welche fotografische Aufnahmen der zu befahrenden Oberfläche erstellen. Diese fotografischen Aufnahmen werden regelmäßig ausgewertet, um beispielsweise Hindernisse oder Abgründe zu erkennen.

Darüber hinaus ist es im Stand der Technik auch bekannt, die fotografischen Aufnahmen der Kamera dahingehend zu analysieren, um welche Art von Oberfläche es sich handelt. In der Praxis sollen Reinigungs- oder Bearbeitungsaktivitäten häufig auf gewisse Bodenbereiche, zum Beispiel einzelne Wohnräume, beschränkt werden. Insbesondere soll beispielsweise sichergestellt werden, dass ein Roboter für Feuchtreinigung, auch Wischroboter genannt, Wasser und Feuchtigkeit nur auf solche Oberflächen aufbringt, welche dafür auch geeignet sind. Daher wurden im Stand der Technik bereits Anstrengungen unternommen, selbsttätig verfahrbare Geräte so auszustatten, dass die betreffenden Oberflächen analysiert und zuverlässig einer bestimmten Klasse zugeordnet werden können. Auf Basis dieser Zuordnung kann der Roboter dann geeignete Fahr- und Reinigungsstrategien wählen.

Obwohl die im Stand der Technik bekannten Geräte bereits eine Lichtquelle zur Bestrahlung der Oberfläche mit Licht und eine optische Detektionseinrichtung zur Detektion des von der Oberfläche reflektierten Lichtes aufweisen, sind diese in Bezug auf ihre spektrale Auflösung für bestimmte Anwendungssituationen nicht ausreichend. Da die optischen Detektionseinrichtungen der bekannten Geräte einen Standard-Farbbildsensor (RGB-Sensor) aufweisen, stehen für die Detektion lediglich drei Farbkanäle zur Verfügung. Besonders üblich ist dabei beispielsweise die Verwendung eines sogenannten Bayer-Sensors, welcher über eine schachbrettartige Filterstruktur verfügt, die meist zu 50 % aus Grünfiltern und je zu 25 % aus Rot- und Blaufiltern besteht. Nachteilig bei diesen Sensoren ist, dass jeder Farbkanal nur integrale Farbinformationen aus einem relativ großen Teilbereich des Lichtspektrums liefert. So zum Beispiel wird der grüne Teilbereich des Lichtspektrums nicht noch weiter in unterschiedliche Grüntöne unterteilt. Damit stehen nach der Detektion des Lichtes mittels eines solchen RGB-Sensors keine detaillierteren Informationen mehr zur Verfügung, welche Rückschlüsse auf die ursprüngliche spektrale Verteilung der an der Oberfläche reflektierten Strahlung zulassen. Dementsprechend wären beispielsweise zwei grüne Oberflächen, welche unterschiedliche Grüntöne aufweisen, nicht voneinander unterscheidbar.

Es ist daher Aufgabe der vorliegenden Erfindung, ein Gerät zur Reinigung oder Bearbeitung einer Oberfläche sowie ein Verfahren der in Rede stehenden Art zu schaffen, welches unterschiedliche Oberflächen mit einer zu dem Stand der Technik besseren Auflösung unterscheidet.

Zur Lösung der vorgenannten Aufgabe schlägt die Erfindung ein Gerät zur Reinigung oder Bearbeitung einer Oberfläche der vorgenannten Art gemäß Anspruch 1 vor.

Mit der Erfindung wird somit ein Gerät zur Reinigung oder Bearbeitung einer Oberfläche geschaffen, bei welchem eine Spektralanalyse des von der Oberfläche reflektierten Lichtes mit höherer Auflösung möglich ist als im Stand der Technik. Im Gegensatz zu den bekannten Geräten, welche lediglich optische Detektionseinrichtungen mit RGB-Filtern aufweisen, lässt sich das reflektierte Licht in Bezug auf mehr als drei spektrale Teilbereiche detektieren und analysieren. Hierdurch sind beispielsweise auch unterschiedliche Grüntöne zu unterscheiden. Dies ist insbesondere überall dort wertvoll, wo Oberflächen annähernd gleiche Strukturen aufweisen, nicht jedoch die gleiche Farbe. Dies kann beispielsweise bei gleichartigen Teppichen mit unterschiedlicher Färbung oder auch gleichartigen Rasenflächen mit unterschiedlichem Grünton zum Tragen kommen. Insbesondere ist es möglich, dass auf die Teppichböden aufgrund der unterschiedlichen Färbung andere Reinigungsmittel aufgebracht werden müssen oder dass es sich bei den Rasenflächen um solche handelt, welche einer Sonneneinstrahlung in unterschiedlich starkem Maße ausgesetzt waren und somit mehr oder weniger stark gemäht werden sollten.

Die optische Detektionseinrichtung kann somit nach der Art einer Multispektralkamera, Hyperspektralkamera oder eines Mikrospektrometers ausgebildet sein.

Die Detektionseinrichtung kann zu diesem Zweck mindestens vier Filterelemente aufweisen, wobei jedes Filterelement einen von den anderen Filterelementen abweichenden Spektralbereich aufweist. Diese Filterelemente können beispielsweise auf einem rotierenden Filterrad angeordnet sein, wobei für jede Messung jeweils eines der Filterelemente in die optische Achse des von der Oberfläche reflektierten Lichtes gehalten wird. Durch die Rotation des Filterrades können somit nacheinander alle Filterelemente auf das reflektierte Licht angewendet werden, so dass ein in Propagationsrichtung des Lichtes angeordnetes Sensorelement nacheinander die abweichenden spektralen Anteile des Lichtes messen kann. Je nachdem, wie viele Filterelemente mit voneinander abweichenden Spektralbereichen verwendet werden, lässt sich die Auflösung der optischen Detektionseinrichtung variieren. Dabei steigt die Auflösung mit der Anzahl der verwendeten Filterelemente. Grundsätzlich können besonders in denjenigen Teilbereichen des Lichtspektrums besonders viele Filterelemente eingesetzt werden, in welchen eine besonders hohe Auflösung benötigt wird. Sofern es sich beispielsweise um Oberflächen handelt, welche hauptsächlich Grüntöne beinhalten, sollten besonders viele Filterelemente für den grünen Spektralbereich vorgesehen sein, während für die spektral danebenliegenden Teilbereiche nur wenige oder gar keine Filterelemente vorgehalten werden müssen.

Die Filterelemente können je nach der Art des optischen Aufbaus der Detektionseinrichtung beispielsweise Band-Pass-Filter oder Band-Stop-Filter sein. Band-Pass-Filter selektieren das Licht in Transmission, während Band-Stop-Filter das Licht in Reflexion selektieren (beispielsweise als dichroitischer Spiegel).

In Verbindung mit der zuvor dargestellten Anordnung eines Filterrades empfiehlt es sich, dass die Detektionseinrichtung ein den Filterelementen gemeinsam zugeordnetes Sensorelement aufweist. Durch die Rotation des mit unterschiedlichen Filterelementen bestückten Filterrades ist es möglich, die Filterelemente jeweils in Bezug auf die Propagationsrichtung des reflektierten Lichtes vor das Sensorelement zu bringen, so dass das Licht - zeitlich aufeinander folgend - jeweils in Bezug auf einen anderen Spektralbereich gefiltert wird.

Das gemeinsam zugeordnete Sensorelement kann dabei besonders vorteilhaft eine einzelne Fotodiode sein. Diese wird dann - bei gleichmäßiger Umfangsverteilung der Filterelemente auf dem Filterrad - mit einer zeitlichen Wiederholrate ausgelesen, welche dem Produkt der Filterelementeanzahl und der Rotationsfrequenz des Filterrades entspricht. Bevor die optische Detektionseinrichtung somit von einem ersten Filterelement zu einem zweiten Filterelement wechselt, empfiehlt es sich, die Fotodiode auszulesen. Fotodioden sind kostengünstige Massenware und können ohne großen apparativen Aufwand ausgelesen werden. Darüber hinaus können auch solche Fotodioden eingesetzt werden, welche eine besonders große Pixelfläche und somit eine besonders hohe Empfindlichkeit aufweisen. Dies ist insbesondere bei der Analyse von nur schwach reflektierenden Oberflächen von Vorteil.

Bei einem alternativen Gerät, welches jenseits des Umfangs der Erfindung liegt, ist es auch möglich, dass die Detektionseinrichtung mehrere Sensorelemente aufweist, wobei jedem Filterelement ein eigenes Sensorelement zugeordnet ist. Die Sensorelemente können dabei nach der Art eines Fotodiodenarrays angeordnet sein, wobei für die erfindungsgemäße multispektrale Detektion die Verwendung von mindestens vier Fotodioden vorteilhaft ist. Das Fotodiodenarray kann dabei ein integriertes Modul sein oder aber aus einzelnen Fotodioden, gegebenenfalls auch verschiedenen Diodentypen, aufgebaut sein. Jedem der Sensorelemente ist dabei ein einzelnes Filterelement zugeordnet, so dass das Sensorelement lediglich Licht eines bestimmten spektralen Bereiches detektiert. Die Filtercharakteristik der Sensorelemente kann dabei insgesamt so gewählt werden, dass diese das gesamte sichtbare Lichtspektrum abdeckt. Bei einer Verwendung von vier Filterelementen und vier korrespondierenden Sensorelementen können beispielsweise ein Rotfilter und eine Fotodiode die Detektion des roten Spektralbereiches übernehmen, während ein gelbes Filterelement und eine Fotodiode die Detektion des gelben Lichtes übernehmen, ein grünes Filterelement und eine Fotodiode die Detektion des grünen Spektralanteils und ein blaues Filterelement und eine Fotodiode entsprechend die Detektion des blauen Spektralanteils.

Alternativ zu dem vorgenannten Fotodiodenarray ist es auch möglich, dass die Detektionseinrichtung einen CCD-Chip oder CMOS-Chip aufweist. Unterschiedliche Bereiche des Chips können dabei mit Licht unterschiedlicher Wellenlänge bestrahlt werden, wobei die beispielsweise zeilenweise aus dem Chip ausgelesenen Daten einem bestimmten Spektralbereich des Lichts zugeordnet werden können. Gemäß dieser Ausgestaltung erübrigen sich mehrere Fotodioden.

Bei einem alternativen Gerät, welches jenseits des Umfangs der Erfindung liegt, weist die Detektionseinrichtung ein optisch dispersives Element auf.

Hierdurch ergibt sich eine Alternative zu der Anordnung einer Mehrzahl von Filterelementen, welche jeweils einen von den anderen Filterelementen abweichenden Spektralbereich aufweisen. Das optisch dispersive Element ist in besonders einfacher Ausgestaltung ein Prisma oder auch ein Gitter, welches das von der Oberfläche reflektierte Licht in seine einzelnen Spektralanteile aufspaltet, so dass diese räumlich getrennt auf ein oder mehrere Sensorelemente treffen können. Hierdurch kann das Bereitstellen einer Vielzahl von Filterelementen entfallen. Darüber hinaus kann auch das zuvor dargestellte Filterrad entfallen, welches eine besondere Mechanik sowie einen Motor für den Antrieb des Filterrades erfordert. Insofern lässt sich die optische Detektionseinrichtung besonders einfach und robust ausgestalten. Das optisch dispersive Element kann dabei sowohl in Verbindung mit mehreren separaten Sensorelementen als auch in Verbindung mit einem CCD-Chip oder CMOS-Chip verwendet werden.

Die Erfindung schlägt weiterhin vor, dass die Wellenlänge des von der Lichtquelle emittierten Lichtes auf die Reflektionseigenschaften zumindest eines Teils der Oberfläche abgestimmt ist. Somit kann die Lichtquelle gezielt in einem Spektralbereich des Lichtes emittieren, für welchen ein Teil der Oberfläche einen hohen Reflektionsgrad aufweist. Eine Oberfläche kann somit beispielsweise mit einer Art "Absperrband" versehen sein, welches Absperrband eine besonders hohe Reflektion für einen Teil des Lichtspektrums aufweist, der nicht dem sichtbaren Licht zuzuordnen ist. Die Oberfläche kann zu diesem Zweck beispielsweise mit einer für das menschliche Auge unsichtbaren Farbe markiert sein. Solche "unsichtbaren Farben" werden beispielsweise bei der Markierung von Geldscheinen verwendet und können durch ultraviolettes Licht angeregt werden, woraufhin Fluoreszenzstrahlung emittiert wird, welche von einem entsprechenden Sensorelement detektiert werden kann. Insofern ergibt sich ein besonderes System aus Lichtquelle, Oberfläche und Sensorelement. Darüber hinaus kann ein solches Lichtquelle-Sensorelement-System auch auf spezielle Oberflächen wie Holz, Teppich, Fliesen, Rasen optimiert werden.

Gemäß der Erfindung kann die Lichtquelle eine Weißlichtquelle, insbesondere eine Halogenlampe, oder auch eine UV-Lichtquelle sein. Darüber hinaus sind je nach Art der Oberfläche auch andere Lichtquellen denkbar, welche in davon abweichenden Spektralbereichen emittieren.

Sowohl die Lichtquelle als auch die Detektionseinrichtung sind vorteilhaft innerhalb eines Gehäuses des Gerätes angeordnet, wobei das Gehäuse eine Austrittsöffnung aufweist, welche so ausgebildet und angeordnet ist, dass das Licht der Lichtquelle auf die Oberfläche trifft und das von der Oberfläche reflektierte Licht auf die Detektionseinrichtung trifft. Diese Anordnung schützt zum einen die Lichtquelle und die Detektionseinrichtung vor Verschmutzung, zum anderen ist sichergestellt, dass das Licht der Lichtquelle aus dem Gehäuse austreten kann und nach der Reflektion an der Oberfläche wieder in das Gehäuse zurückgelangt, um dort von der Detektionseinrichtung detektiert zu werden.

Schließlich, in einem weiteren Ausführungsbeispiel der Erfindung, weist das Gerät eine Auswerteeinheit auf, welche ausgebildet ist, das mittels der Detektionseinrichtung detektierte Licht in Bezug auf die Intensitäten in den unterschiedlichen Spektralbereichen auszuwerten und zur Bestimmung der Art der Oberfläche mit Referenzintensitäten unterschiedlicher Oberflächen zu vergleichen. Die Auswerteeinheit wertet somit das von der Detektionseinrichtung detektierte Licht dahingehend aus, ob und welche Übereinstimmungen mit bekannten Oberflächen bestehen. Sofern eine Übereinstimmung festgestellt wird, kann davon ausgegangen werden, dass es sich bei der aktuell ausgewerteten Oberfläche um die bekannte Oberfläche handelt. Auf der Basis dieser Wiedererkennung kann dann ein autonom arbeitendes Gerät geschaffen werden, welches seine Fahr- und/oder Reinigungsstrategie/Bearbeitungsstrategie auf die erkannte Oberfläche optimiert.

Neben dem zuvor dargestellten Gerät wird mit der Erfindung ebenfalls ein Verfahren zum Betrieb eines solchen Gerätes geschaffen, wobei eine Oberfläche mit Licht bestrahlt wird und von der Oberfläche reflektiertes Licht in Bezug auf mindestens vier unterschiedliche Spektralbereiche detektiert wird.

Im Folgenden wird die Erfindung anhand von Ausführungsbeispielen näher erläutert. Es zeigen:
- Fig. 1:: ein erfindungsgemäßes Gerät auf einer Oberfläche,
- Fig. 2:: ein erfindungsgemäßes Gerät in einer Ansicht von unten,
- Fig. 3:: eine Detektionseinrichtung gemäß der Erfindung,
- Fig. 4:: eine Detektionseinrichtung gemäß einem alternativen Gerät jenseits des Umfangs der Erfindung,
- Fig. 5:: eine Detektionseinrichtung gemäß einem weiteren alternativen Gerät jenseits des Umfangs der Erfindung,
- Fig. 6:: eine Detektionseinrichtung gemäß einem weiteren alternativen Gerät jenseits des Umfangs der Erfindung.

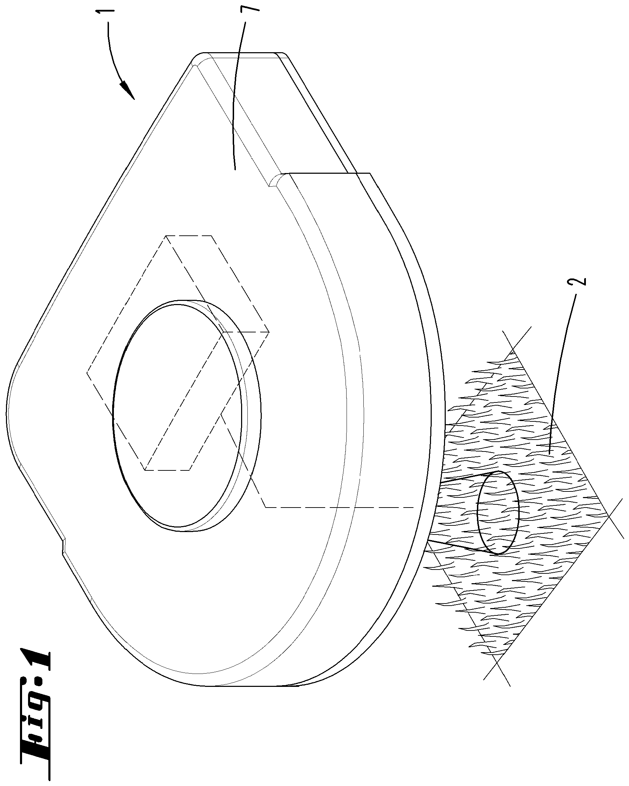

Bei dem in Figur 1 dargestellten Gerät 1 handelt es sich um ein Gerät 1 zur Reinigung oder Bearbeitung einer Oberfläche 2. Solche Geräte werden verwendet, um Oberflächen 2 zu reinigen oder zu bearbeiten. Bei den Oberflächen 2 kann es sich sowohl um Bodenbeläge wie Teppiche, Laminat, Parkett oder ähnliches handeln, als auch um gegebenenfalls zu mähende Rasenflächen. Das beispielhaft dargestellte Gerät 1 ist mit einer Steuerung ausgestattet, die das Fahr- und Reinigungs- beziehungsweise Bearbeitungsverhalten des Gerätes 1 steuert. So kann das beispielhafte Gerät 1 völlig selbsttätig in einem Raum umherfahren und Reinigungs- beziehungsweise Bearbeitungsvorgänge durchführen. Ein Gerät 1 dieser Art, welches als Saugroboter ausgebildet ist, kann beispielsweise einen oder mehrere Räume systematisch abfahren, so dass die Oberfläche lückenlos gereinigt wird.

Das äußere Erscheinungsbild des Gerätes 1 ist durch sein Gehäuse 7 geprägt, welches wie in Figur 1 dargestellt, ausgebildet sein kann.

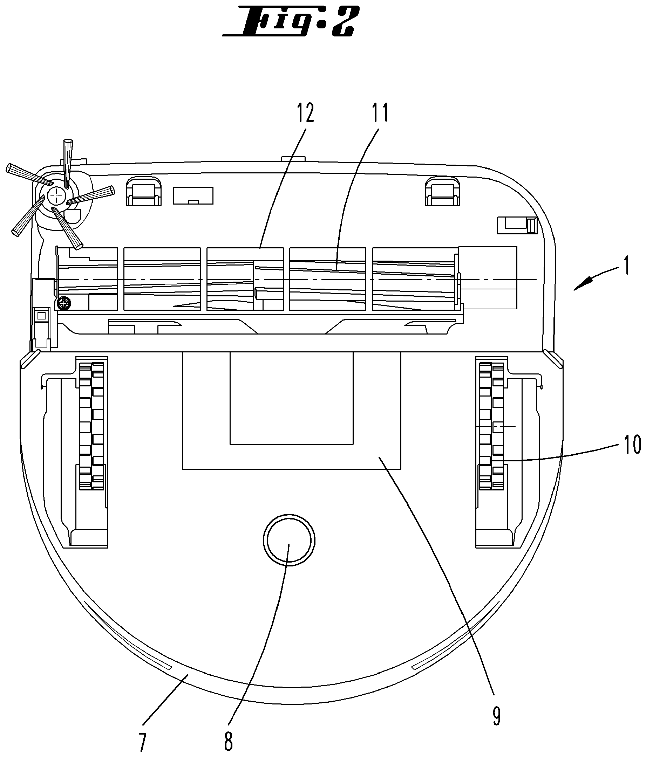

Figur 2 zeigt ein Gerät 1 in einer Ansicht von unten. Das Gerät 1 weist beispielsweise elektromotorisch angetriebene Verfahrräder 10 sowie eine gleichfalls elektromotorisch angetriebene Bürste 11 auf. Die Bürste 11 befindet sich innerhalb einer Saugmundöffnung 12, die das Gehäuse 7 beispielsweise als Summe fensterartiger Öffnungen durchsetzt. Um Staub und Schmutz in einen Behälter des Gerätes 1 einzusaugen, weist das Gerät 1 ein Sauggebläse (nicht dargestellt) auf. Des Weiteren weist das Gerät 1 auf seiner Unterseite eine Austrittsöffnung 8 innerhalb des Gehäuses 7 auf, hinter welcher eine optische Detektionseinrichtung 4 (in Figur 2 nicht dargestellt) angeordnet ist. Durch diese Austrittsöffnung 8 kann Licht aus dem Gehäuse 7 austreten und auf die Oberfläche 2 geleitet werden. Mit der optischen Detektionseinrichtung 4 ist eine Auswerteeinheit 9 verbunden, welche die detektierten Signale auswertet.

Die Spannungsversorgung der einzelnen Komponenten des Gerätes 1, wie insbesondere des Antriebsmotors für die Verfahrräder 10, des Elektroantriebs für die Bürste 11, des Motors für das Sauggebläse und weiterer Komponenten, ist über einen nicht dargestellten, wieder aufladbaren Akkumulator sichergestellt.

Das beispielhaft dargestellte Gerät 1 verfügt über eine Steuerung (nicht dargestellt), die das Fahrverhalten und/oder Reinigungs- oder Bearbeitungsverhalten des Gerätes 1 in Abhängigkeit von einem Auswerteergebnis der Auswerteeinheit 9 steuert. Die Steuerung erfolgt dabei in Abhängigkeit von der Art der detektierten Oberfläche 2 oder auch Parametern, wie beispielsweise auf der Oberfläche 2 angeordneten Hindernissen oder einem Verschmutzungsgrad der Oberfläche 2. Das Gerät 1 kann grundsätzlich ein selbsttätig verfahrbares oder auch ein handgeführtes Gerät 1 sein.

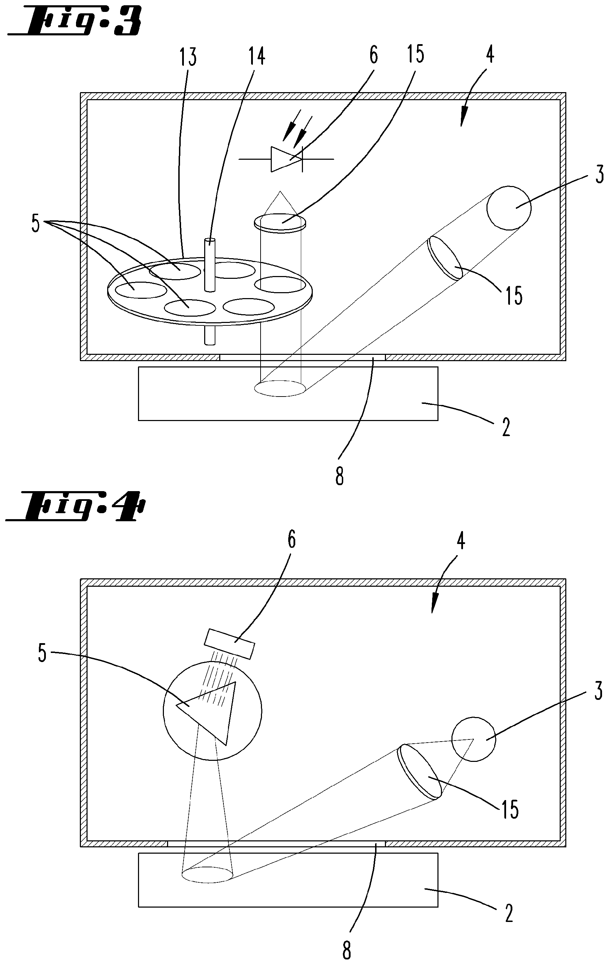

Das Gerät 1 weist, wie in den Figuren 3 bis 5 dargestellt, eine Lichtquelle 3 zur Bestrahlung der Oberfläche 2 mit Licht auf, sowie eine optische Detektionseinrichtung 4 zur Detektion des von der Oberfläche 2 reflektierten Lichtes. Damit das Licht, welches von der innerhalb des Gehäuses 7 angeordneten Lichtquelle 3 emittiert wird, auf die Oberfläche 2 gelangen kann, ist das Gehäuse 7 mit einer Austrittsöffnung 8 versehen. Durch diese Austrittsöffnung 8 gelangt das Licht von der Lichtquelle 3 auf die Oberfläche 2 und wird zumindest teilweise von der Oberfläche 2 in Richtung der optischen Detektionseinrichtung 4 zurückreflektiert.

Wie in den Figuren dargestellt, weist die optische Detektionseinrichtung 4 zumindest ein Filterelement 5 und zumindest ein Sensorelement 6 auf. Sowohl das Filterelement 5 beziehungsweise die Filterelemente 5 als auch das Sensorelement 6 beziehungsweise die Sensorelemente 6 sind angeordnet und ausgebildet, das von der Oberfläche 2 reflektierte Licht in Bezug auf mindestens vier unterschiedliche Spektralbereiche zu detektieren.

In dem Ausführungsbeispiel gemäß Figur 3 weist die optische Detektionseinrichtung 4 eine Mehrzahl von Filterelementen 5 auf, welche in einem Filterrad 13 angeordnet sind. Die insgesamt sechs Filterelemente 5 sind entlang einer Kreisbahn im Filterrad 13 angeordnet. Das Filterrad 13 rotiert um eine Rotationsachse 14, so dass gleichzeitig auch die einzelnen Filterelemente 5 um die Rotationsachse 14 kreisen. Dabei korreliert jeweils eine Position der Filterelemente 5 mit der optischen Achse des von der Oberfläche 2 reflektierten Lichtes. Das Licht, welches von der Oberfläche 2 reflektiert wird, durchsetzt somit in seitlicher Aufeinanderfolge die auf dem Filterrad 13 angeordneten Filterelemente 5. Das Filterrad 13 kann dabei kontinuierlich mit langsamer Geschwindigkeit rotieren oder das Filterrad 13 kann so angesteuert werden, dass es gezielt eine Position einnimmt, bei welcher die Position eines Filterelementes 5 genau in die optische Achse des reflektierten Lichtes fällt. Sobald diese Position erreicht ist, kann das Filterrad 13 angehalten werden, um eine Messung während des Stillstands der Filterelemente 5 zu ermöglichen. Erst wenn die Messung abgeschlossen ist, kann das Filterrad 13 dann weiter rotieren, bis das nächste Filterelement 5 in die optische Achse des reflektierten Lichtes gelangt.

Die Filterelemente 5, welche sich innerhalb des Filterrades 13 befinden, sind gemäß Figur 3 als Transmissionsfilter (Band-Pass-Filter) ausgebildet. Dabei wird genau der spektrale Anteil des Lichtes durchgelassen, welcher den Filtereigenschaften des Filterelementes 5 entspricht. Der gefilterte Lichtanteil trifft anschließend auf ein Sensorelement 6, welches beispielsweise eine Fotodiode sein kann. Es empfiehlt sich, dass auf der optischen Achse zwischen dem Filterelement 5 und dem Sensorelement 6 eine Optik 15 angeordnet ist, welche das von dem Filterelement 5 transmittierte Licht auf das Sensorelement 6 fokussiert. Bei dieser Optik 15 kann es sich beispielsweise um eine fokussierende Linse handeln. Darüber hinaus ist es auch möglich, dass die Optik 15 eine Objektiv-Anordnung aus mehreren Linsen ist.

Alternativ zu der Ausbildung der Filterelemente 5 als Transmissionsfilter (Band-Pass-Filter) können diese Filterelemente 5 auch als Reflektionsfilter (Band-Stop-Filter) ausgebildet sein. In diesem Fall würden die Filterelemente 5 den zu filternden spektralen Anteil des reflektierten Lichtes reflektieren, so dass das Sensorelement 6 ebenfalls auf der Seite des Filterelementes 5 anzuordnen wäre, welche der der Oberfläche 2 zugewandten Seite des Filterelementes 5 entspricht.

Bei dem in Figur 3 dargestellten Sensorelement 6 könnte es sich alternativ zu einer Fotodiode auch um einen üblichen Kamerachip, wie beispielsweise einem CCD-Chip oder CMOS-Chip handeln.

Das Filterrad 13 ist in dem Ausführungsbeispiel mit sechs verschiedenen Filterelementen 5 ausgestattet. Diese Filterelemente 5 unterscheiden sich in Bezug auf die transmittierten Spektralbereiche des Lichtes. Beispielsweise kann ein erstes Filterelement 5 einen ersten spektralen Teilbereich transmittieren, während ein zweites Filterelement 5 einen zweiten spektralen Teilbereich transmittiert. Für eine möglichst hohe Auflösung der optischen Detektionseinrichtung 4 empfiehlt es sich, dass das Filterrad 13 mit möglichst vielen Filterelementen 5 belegt ist. Je mehr Filterelemente 5 zur Detektion verwendet werden, in desto mehr spektrale Teilbereiche lässt sich das Spektrum des von der Oberfläche 2 reflektierten Lichtes aufteilen. Das Sensorelement 6, welches in diesem Ausführungsbeispiel eine Fotodiode ist, wird dabei von der Auswerteeinheit 9 stets dann ausgelesen, wenn ein neues Filterelement 5 in die optische Achse zwischen dem reflektierenden Teil der Oberfläche 2 und der Fotodiode als Sensorelement 6 angeordnet wird. Alternativ kann die Auswerteeinheit 9 den Diodenstrom auch kontinuierlich auslesen und für die Auswertung denjenigen Wert des Diodenstroms heranziehen, welcher einem Zeitpunkt entspricht, zu welchem die Position eines Filterelementes 5 mit der optischen Achse des reflektierten Lichtes übereinstimmt.

Die Auswerteeinheit 9 erhält somit bei einer vollständigen 360°-Rotation des Filterrades 13 Aufschluss über die spektralen Komponenten, welche in dem von der Oberfläche 2 reflektierten Licht enthalten sind. Da die Auswerteeinheit 9 eine Information darüber erhält, zu welchem Zeitpunkt sich welches spektrale Filterelement 5 in der optischen Achse des reflektierten Lichtes befindet, können die Intensitäten der einzelnen spektralen Lichtanteile zugeordnet werden. Die Auswerteinheit 9 erstellt daraus ein Spektrum des reflektierten Lichtes und vergleicht dieses gemessene Spektrum mit Referenzspektren bekannter Oberflächen 2. Sofern eine Übereinstimmung zwischen dem gemessenen Spektrum und einem Referenzspektrum identifiziert wird, kann die Auswerteeinheit 9 die gemessene Oberfläche 2 wiedererkennen. Beispielsweise ermittelt die Auswerteeinheit 9, dass es sich bei der zu reinigenden Oberfläche 2 um einen grünen Teppichboden handelt. Diese Information kann nun dazu verwendet werden, das Gerät 1 nur auf einer "freigegebenen" Oberfläche 2 fahren zu lassen. Sobald das Gerät 1 erkennt, dass sich das Spektrum der aktuell befahrenen Oberfläche 2 ändert, kann eine Routine vorgesehen sein, die das Gerät 1 zu einer Umkehr veranlasst. Ebenso können auch von dem Gerät 1 ausgeführte Reinigungs- oder Bearbeitungsvorgänge in Abhängigkeit von dem gemessenen Spektrum gesteuert werden. Beispielsweise können für unterschiedliche Farben der Oberfläche 2 andere Reinigungsmittel verwendet werden.

In Figur 4 ist ein Beispiel einer optischen Detektionseinrichtung 4 dargestellt. Diese optische Detektionseinrichtung 4 weist eine Lichtquelle 3 auf, sowie ein Prisma als Filterelement 5 und einen Chip als Sensorelement 6. Der Chip kann beispielsweise ein CCD-Chip oder ein CMOS-Chip sein. Diese Chips werden allgemein üblich in Digitalkameras verwendet. Die Erfindung funktioniert gemäß dieser Ausführungsvariante so, dass das von der Lichtquelle 3 emittierte Licht auf die zu bestimmende Oberfläche 2 tritt und von dort durch die Austrittsöffnung 8 des Gerätegehäuses 7 in Richtung des Filterelementes 5 reflektiert wird. Das Filterelement 5 ist beispielsweise ein Prisma mit gleichseitigem Dreieck als Grundfläche, welches das von der Oberfläche 2 reflektierte Licht in seine spektralen Komponenten auffächert. Dadurch liegen die spektralen Anteile des Lichtes bereits örtlich getrennt vor, so dass diese gemeinsam auf das Sensorelement 6 geleitet werden können. Der Kamera-Chip wird sodann zum Beispiel zeilenweise ausgelesen, so dass bestimmte Zeilen definierten Spektralbereichen des reflektierten Lichtes zugeordnet werden können. Insofern ergibt sich nach dem Auslesen des Sensorelementes 6 ein Spektrum des reflektierten Lichtes, welches die Intensitäten der einzelnen Spektralbereiche wiedergibt. Wie zuvor bereits in Bezug auf Figur 3 erläutert, wird dieses gemessene Spektrum dann mit Referenzspektren bekannter Oberflächen 2 verglichen und bei Wiedererkennung einer bestimmten Oberfläche 2 eine entsprechende Verfahrroutine oder Reinigungs-/Bearbeitungsroutine des Gerätes 1 ausgeführt.

Alternativ zu der Verwendung eines CCD-Chips oder CMOS-Chips kann auch ein Fotodioden-Array aus linear nebeneinander angeordneten Fotodioden verwendet werden. In diesem Fall wird jeweils ein spektraler Anteil des reflektierten Lichtes auf eine separate Fotodiode reflektiert. Die Abstände der nebeneinander angeordneten Fotodioden sind dabei so zu bemessen, dass der Abstand dem Abstand der Spektralanteile des Lichtes hinter dem Filterelement 5, d.h. dem Prisma, entspricht. Durch eine Rotation des Prismas lassen sich die Abstände der spektralen Anteile überdies an einen gegebenen Abstand der Fotodioden anpassen.

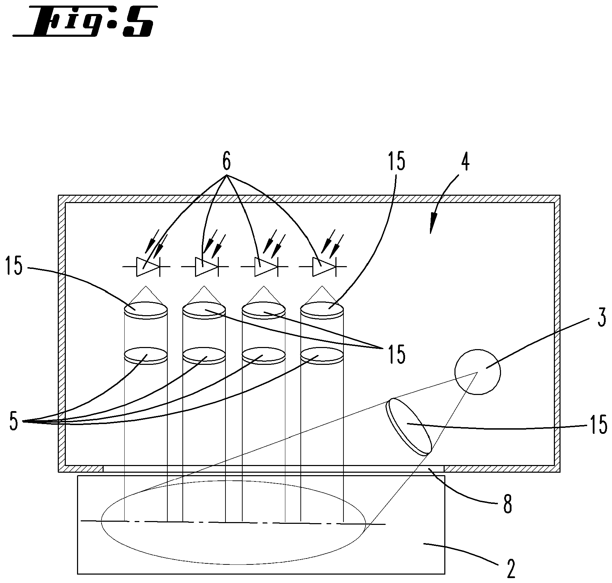

In Figur 5 ist ein weiteres Beispiel einer optischen Detektionseinrichtung 4 dargestellt, welche eine bestimmte Anzahl Filterelemente 5 und eine dazu korrespondierende Anzahl von Sensorelementen 6 aufweist. Es handelt sich bei den Filterelementen 5 beispielsweise um vier Transmissionsfilter, und bei den Sensorelementen 6 um vier Fotodioden. Die Fotodioden sind hier beispielsweise linear nebeneinander angeordnet und entsprechen den Abständen der linear nebeneinander angeordneten Filterelemente 5. Grundsätzlich ist es jedoch auch möglich, die Filterelemente 5 und die Sensorelemente 6 in einer freien räumlichen Anordnung zu positionieren. Wichtig ist lediglich, dass diese sich in Propagationsrichtung des von der Oberfläche 2 reflektieren Lichtes befinden. Das von der Lichtquelle 3 emittierte Licht wird über eine Optik 15 so aufgeweitet, dass ein größerer Bereich der Oberfläche 2 beleuchtet wird. Das von der Oberfläche 2 reflektierte Licht fällt auf die nebeneinander angeordneten Filterelemente 5, wobei jedes Filterelement 5 einen bestimmten Spektralbereich des reflektierten Lichtes transmittiert. Ein erstes Filterelement 5 kann dabei beispielsweise einen bestimmten Grünanteil des Lichtes durchlassen, während ein zweites Filterelement 5 einen Rotanteil durchlässt. Die einzelnen spektralen Anteile gelangen dann über jeweils eine eigene Optik 15 auf jeweils eine separate Fotodiode. Die mit den Fotodioden verbundene Auswerteeinheit 9 verfügt über eine Information, welche Fotodiode welchem Spektralanteil des Lichtes zugeordnet ist. Dadurch kann die Auswerteeinheit 9 ein Spektrum des von der Oberfläche 2 reflektierten Lichtes erstellen. Dieses gemessene Spektrum wird wiederum mit gespeicherten Spektren bekannter Oberflächen 2 verglichen und bei Wiedererkennung zur Steuerung bestimmter Fahrprozesse oder Reinigungs-/Bearbeitungsprozesse des Gerätes 1 verwendet.

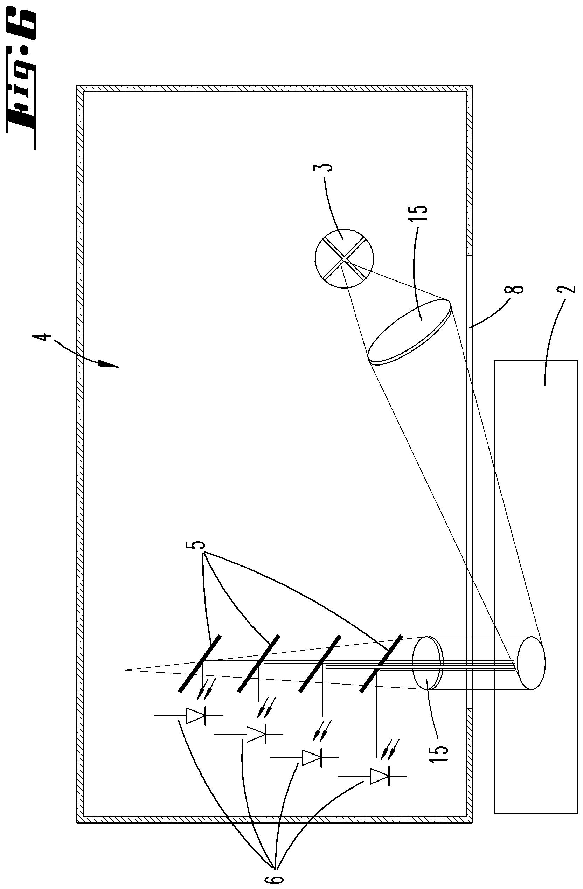

In Figur 6 ist ein weiteres Beispiel einer optischen Detektionseinrichtung 4 dargestellt. Diese optische Detektionseinrichtung 4 beinhaltet ebenfalls Filterelemente 5 und Sensorelemente 6 in korrespondierender Anzahl. Im Gegensatz zu der Anordnung gemäß Figur 5 sind die Filterelemente 5 als Reflektionsfilter ausgebildet. Diese Reflektionsfilter sind in Propagationsrichtung des Lichtes hintereinander angeordnet. Jedem dieser Filterelemente 5 ist ein separates Sensorelement 6 zugeordnet. Die Sensorelemente 6 befinden sich dabei auf der der Oberfläche 2 zugewandten Seite der Filterelemente 5. Jedes Filterelement 5 reflektiert dabei einen bestimmten Spektralbereich des von der Oberfläche 2 reflektierten Lichtes auf das zugehörige Sensorelement 6. Ein erstes Filterelement 5 kann dabei beispielsweise einen bestimmten Grünanteil des Lichtes reflektieren, während ein zweites Filterelement 5 einen Rotanteil reflektiert und so weiter. Die so gefilterten spektralen Anteile des Lichtes gelangen dann auf das jeweilige Sensorelement 6. Die weitere Vorgehensweise bei der Auswertung dieser spektralen Anteile mit Hilfe der Auswerteeinheit 9 erfolgt beispielsweise analog der Darstellung zu Figur 5.

In allen Fällen kann die Wahl der Lichtquelle 3, der Filterelemente 5 sowie der Sensorelemente 6 auf bestimmte Oberflächen 2 angepasst werden. Beispielsweise ist es möglich, dass die Oberfläche 2 gezielt mit einer bestimmten optischen Eigenschaft ausgestattet wird, so dass nur bestimmte spektrale Lichtanteile reflektiert werden. Insbesondere kann die Oberfläche 2 Teilbereiche mit Markierungen aufweisen, welche beispielsweise ultraviolettes Licht absorbieren und Fluoreszenzstrahlung innerhalb eines bestimmten Spektralbereiches emittierten. Die Fluoreszenzstrahlung wird dabei gezielt durch das Licht einer UV-Lichtquelle 3 angeregt. Sowohl die Filterelemente 5 als auch die Sensorelemente 6 sind auf die dazu korrespondierende spektrale Zusammensetzung der emittierten Fluoreszenzstrahlung ausgewählt. Da die zu erwartende Fluoreszenzstrahlung in Bezug auf deren spektrale Zusammensetzung im Allgemeinen bekannt ist, kann ausschließlich dieser Spektralbereich einer Detektion unterzogen werden, d.h. es werden ausschließlich Filterelemente 5 eingesetzt, welche Licht dieser spektralen Teilbereiche transmittieren. Insofern ist es möglich, dass beispielsweise rotes Fluoreszenzlicht in weitere spektrale Teilbereiche unterteilt wird.

Um die zuverlässige Funktion der optischen Detektionseinrichtung 4 sicherzustellen, kann es im Sinne der Erfindung zudem vorgesehen sein, dass in zeitlichen Abständen Referenzmessungen auf einem "Weiß-Standard" durchgeführt werden. Ein solcher "Weiß-Standard" kann beispielsweise in die Innenseite des Gehäuses 7 eingebracht werden. Alternativ ist es beispielsweise auch möglich, eine Referenzmessung durchzuführen, wenn sich das Gerät 1 an einer Basisstation befindet. Insbesondere kann dann eine Grundplatte dieser Basisstation in "Referenzfarbe" ausgebildet sein, so dass die optische Detektionseinrichtung 4 die Referenzmessung in unveränderter Messanordnung und Messrichtung durchführen kann. Die Grundplatte der Basisstation ist dabei eine Oberfläche 2 im Sinne der Erfindung. Eine Referenzmessung kann beispielsweise vor jeder Detektion durch die optische Detektionseinrichtung 4 vorgesehen sein, alternativ kann diese jedoch auch nach einer bestimmten Anzahl von Messungen wiederholt werden oder regelmäßig einmal pro Monat oder ähnliches.

### Bezugszeichenliste:

- 1: Gerät
- 2: Oberfläche
- 3: Lichtquelle
- 4: Detektionseinrichtung
- 5: Filterelement
- 6: Sensorelement
- 7: Gehäuse
- 8: Austrittsöffnung
- 9: Auswerteeinheit
- 10: Verfahrrad
- 11: Bürste
- 12: Saugöffnung
- 13: Filterrad
- 14: Rotationsachse
- 15: Optik

## Patentansprüche

1. Gerät (1) zur Reinigung oder Bearbeitung einer Oberfläche (2), wobei das Gerät (1) eine Lichtquelle (3) zur Bestrahlung der Oberfläche (2) mit Licht und eine optische Detektionseinrichtung (4) zur Detektion des von der Oberfläche (2) reflektierten Lichtes aufweist, **dadurch gekennzeichnet, dass** die optische Detektionseinrichtung (4) mehrere Filterelemente (5) und mindestens ein Sensorelement (6) aufweist, welche angeordnet und ausgebildet sind, das von der Oberfläche (2) reflektierte Licht dieser einen Lichtquelle (3) in Bezug auf mindestens vier unterschiedliche Spektralbereiche zu detektieren, wobei die Detektionseinrichtung (4) ein den Filterelementen (5) gemeinsam zugeordnetes Sensorelement (6) aufweist, wobei die Filterelemente (5) relativ zu dem Sensorelement (6) verlagerbar angeordnet sind und für jede Messung jeweils eines der Filterelemente (5) in die optische Achse des von der Oberfläche (2) reflektierten Lichtes gehalten wird, sodass das Sensorelement (6) nacheinander die abweichenden spektralen Anteile des Lichtes messen kann.

2. Gerät (1) nach Anspruch 1, **dadurch gekennzeichnet, dass** die Detektionseinrichtung (4) mindestens vier Filterelemente (5) aufweist, wobei jedes Filterelement (5) einen von den anderen Filterelementen (5) abweichenden Spektralbereich aufweist.

3. Gerät (1) nach einem der vorhergehenden Ansprüche, **dadurch gekennzeichnet, dass** das Sensorelement (6) eine Fotodiode ist

4. Gerät (1) nach einem der vorhergehenden Ansprüche, **dadurch gekennzeichnet, dass** das Sensorelement (6) ein CCD-Chip oder CMOS-Chip ist.

5. Gerät (1) nach Anspruch 1, **dadurch gekennzeichnet, dass** das Filterelement (5) ein optisch dispersives Element ist.

6. Gerät (1) nach einem der vorhergehenden Ansprüche, **dadurch gekennzeichnet, dass** die Wellenlänge des von der Lichtquelle (3) emittierten Lichtes auf die Reflektionseigenschaften zumindest eines Teils der Oberfläche (2) abgestimmt ist.

7. Gerät (1) nach einem der vorhergehenden Ansprüche, **gekennzeichnet durch** eine Auswerteeinheit (9), welche ausgebildet ist, das mittels der Detektionseinrichtung (4) detektierte Licht in Bezug auf die Intensitäten in den unterschiedlichen Spektralbereichen auszuwerten und zur Bestimmung der Art der Oberfläche (2) mit Referenzintensitäten unterschiedlicher Oberflächen (2) zu vergleichen.

8. Verfahren zum Betrieb eines nach einem der Ansprüche 1 bis 7 ausgebildeten Gerätes (1) zur Reinigung oder Bearbeitung einer Oberfläche (2), **dadurch gekennzeichnet, dass** eine Oberfläche (2) mit Licht bestrahlt wird und von der Oberfläche (2) reflektiertes Licht in Bezug auf mindestens vier unterschiedliche Spektralbereiche detektiert wird.

## Claims

1. Apparatus (1) for cleaning or processing a surface (2), the apparatus (1) having a light source (3) for illuminating the surface (2) with light and an optical detection device (4) for detecting the light reflected by the surface (2), **characterised in that** the optical detection device (4) has a plurality of filter elements (5) and at least one sensor element (6) which are arranged and designed to detect the light reflected from the surface (2) by this one light source (3) with respect to at least four different spectral ranges, wherein the detection device (4) has a sensor element (6) assigned jointly to the filter elements (5), wherein the filter elements (5) are arranged displaceably relative to the sensor element (6) and for each measurement in each case one of the filter elements (5) is held in the optical axis of the light reflected from the surface (2) so that the sensor element (6) can successively measure the differing spectral components of the light.

2. Apparatus (1) according to claim 1, **characterised in that** the detection device (4) comprises at least four filter elements (5), each filter element (5) having a spectral range that differs from that of the other filter elements (5).

3. Apparatus (1) according to one of the preceding claims, **characterised in that** the sensor element (6) is a photodiode.

4. Apparatus (1) according to one of the preceding claims, **characterised in that** the sensor element (6) is a CCD chip or CMOS chip.

5. Apparatus (1) according to claim 1, **characterised in that** the filter element (5) is an optically dispersive element.

6. Apparatus (1) according to one of the preceding claims, **characterised in that** the wavelength of the light emitted by the light source (3) is matched to the reflection properties of at least part of the surface (2).

7. Apparatus (1) according to one of the preceding claims, **characterised by** an evaluation unit (9) which is designed to evaluate the light detected by means of the detection device (4) with respect to the intensities in the different spectral ranges and to compare it with reference intensities of different surfaces (2) in order to determine the type of surface (2).

8. A method of operating an apparatus (1) for cleaning or processing a surface (2), the apparatus being configured according to any one of claims 1 to 7, **characterised in that** a surface (2) is illuminated with light and light reflected from the surface (2) is detected with respect to at least four different spectral ranges.

## Revendications

1. Appareil (1) pour le nettoyage ou le traitement d'une surface (2), l'appareil (1) présentant une source lumineuse (3) pour l'irradiation de la surface (2) avec de la lumière et un dispositif de détection optique (4) pour la détection de la lumière réfléchie par la surface (2), **caractérisé en ce que** le dispositif de détection optique (4) présente plusieurs éléments de filtre (5) et au moins un élément de capteur (6) qui sont disposés et conçus pour détecter la lumière réfléchie par la surface (2) de cette source lumineuse (3) par rapport à au moins quatre domaines spectraux différents, le dispositif de détection (4) présentant un élément de capteur (6) associé en commun aux éléments de filtre (5), les éléments de filtre (5) étant disposés de manière à pouvoir être déplacés par rapport à l'élément de capteur (6) et, pour chaque mesure, l'un des éléments de filtre (5) étant maintenu dans l'axe optique de la lumière réfléchie par la surface (2), de sorte que l'élément de capteur (6) peut mesurer successivement les parties spectrales divergentes de la lumière.

2. Appareil (1) selon la revendication 1, **caractérisé en ce que** le dispositif de détection (4) comporte au moins quatre éléments de filtre (5), chaque élément de filtre (5) présentant une plage spectrale différente de celle des autres éléments de filtre (5).

3. Appareil (1) selon l'une des revendications précédentes, **caractérisé en ce que** l'élément de capteur (6) est une photodiode.

4. Appareil (1) selon l'une des revendications précédentes, **caractérisé en ce que** l'élément de capteur (6) est une puce CCD ou une puce CMOS.

5. Appareil (1) selon la revendication 1, **caractérisé en ce que** l'élément de filtre (5) est un élément optiquement dispersif.

6. Appareil (1) selon l'une des revendications précédentes, **caractérisé en ce que** la longueur d'onde de la lumière émise par la source lumineuse (3) est adaptée aux propriétés de réflexion d'au moins une partie de la surface (2).

7. Appareil (1) selon l'une des revendications précédentes, **caractérisé par** une unité d'évaluation (9) qui est conçue pour évaluer la lumière détectée au moyen du dispositif de détection (4) en ce qui concerne les intensités dans les différents domaines spectraux et pour la comparer à des intensités de référence de différentes surfaces (2) afin de déterminer le type de la surface (2).

8. Procédé de fonctionnement d'un appareil (1) réalisé selon l'une des revendications 1 à 7 pour le nettoyage ou le traitement d'une surface (2), **caractérisé en ce qu'**une surface (2) est irradiée par de la lumière et la lumière réfléchie par la surface (2) est détectée par rapport à au moins quatre domaines spectraux différents.
